# EUROPEAN PATENT SPECIFICATION

(11) **EP 0 869 706 B1**
(45) Date of publication and mention of the grant of the patent: **13.06.2001**
(21) Application number: 97936813.1
(22) Date of filing: 26.08.1997
(51) Int. Cl.: A01D 47/00

(54) **A CROP COLLECTION DEVICE**
ERNTEMASCHINE
MOISSONNEUSE

(30) Priority: 30.08.1996 GB 9618156
(43) Date of publication of application: 14.10.1998
(73) Proprietor: Saunders, Patrick George, Faringdon Oxfordshire SN7 8BH (GB)
(72) Inventor: Saunders, Patrick George, Faringdon Oxfordshire SN7 8BH (GB)
(74) Representative: Armitage, Ian Michael
(86) International application number: GB9702290
(87) International publication number: WO9808373

(56) References cited:
- AU-B- 436 344
- DE-A- 2 023 240
- FR-A- 1 013 378
- FR-A- 2 382 173
- FR-A- 2 556 925
- GB-A- 680 212
- GB-A- 2 106 766
- US-A- 3 143 839
- US-A- 4 040 238
- US-A- 4 253 296

## Description

The present invention relates to agricultural machinery, particularly to a device for harvesting a first crop in preference to a second crop where both crops grow in combination. The term "harvesting" and "crop" in this context is not limited to collection of the first crop, but to the first crop being of any utility. Indeed the first crop may be a weed species, and "harvesting" may simply involve cutting it.

In order to obtain a good yield of a desired crop it is important to provide the crop with the best growing conditions possible. Unfortunately these conditions are usually ideal growing conditions for weeds or undesired further crops which flourish alongside the desired crop. Such undesired crops include wild oats which grow alongside wheat and successfully compete for sunlight, moisture and nutrients. This competition causes a decrease in the wheat yield. Further, the wild oat seeds are inevitably harvested with the wheat causing an impure harvest.

Common practice is to remove the wild oats by using chemicals that can distinguish between the crops. These chemicals kill the wild oats while leaving the wheat relatively unharmed. However, it is desirable to limit the use of chemicals as much as possible and, for organic farmers, they must be avoided altogether.

A mechanical device for removing crops is known from US-A-4253296.

In accordance with the present invention there is provided a device for removing a first crop while maintaining a second crop where first and second crops grow in combination, said first crop being taller than said second crop; the device being adapted for mounting on a tractor for driving the device through the first and second crop combination preferably with minimal disturbance of the crop, the device comprising
a. cutting mechanism;
a means for adjusting the height of the cutting mechanism such that it cuts the crop heads from the first crop while avoiding the second crop;
a collector for collecting the cut crop heads; and
a rotatable pick-up reel driven about a transverse axis, and having a plurality of axial sails positioned so as to pass close to said cutting mechanism to draw the crop heads into the collection member.

The device may be mounted on any tractor suitable for driving it through the crop combination. However, the present invention also provides an assembly comprising a tractor and a device as described above wherein the device is mounted on said tractor.

The device is preferably mounted to the front of the tractor so that the operation of the device can be observed by the user.

It is desirable to use a tractor having a raised chassis such that it clears the level of at least the second crop. Further, it is preferable that the tractor has aligned front and rear wheels so as to prevent any additional tracks being made through the crop combination. The front and rear wheels can be arranged to follow preformed tramlines already present throughout the crop. A crop divider may be arranged around the wheels so that the crop can be divided immediately prior to passage of the wheels. In this way the potential damage to the crop by the wheels is minimised.

In a preferred form the cutting mechanism has a cutter bar horizontally arranged for cutting the crop heads from the first crop plant. It is preferable to maintain the cutting mechanism at a position just above the height of the second crop. This position may be adjusted by an arrangement of rams linked to the tractor chassis and under the control of the user. Further, it is preferable to provide a means for tilting the cutting mechanism axis so that, should the tractor tilt (for example if some wheels are in a rut), the cutting mechanism may be tilted in the opposite direction to the tractor thereby keeping it substantially parallel to the height of the second crop.

The pick-up reel preferably has between 2 and 8, and more preferably 5 sails arranged uniformly about the reel so that as the reel rotates the sails draw the first crop onto the cutter mechanism and the cut crop heads into the collector. The ends of the sails are mounted on rotatable reel frame ends. Conveniently the pick-up reel can be adapted from those found on known agricultural machinery such as crop swathers.

Preferably the pick-up reel rotates at a speed faster than the forward speed of the device. This helps to further draw the crop heads into the collector. The speed of rotation of the pick-up reel can be controlled by gears and/or a combination of belts. In a preferred form the position of the pick-up reel on the device can be altered. This can be achieved by one or more rams working in conjunction with the pick-up reel mounting.

During operation the pick-up reel is preferably arranged so that the sails pass the cutting mechanism as close as possible without making contact with it. In this way the crop heads of the first crop are firstly drawn towards the cutting mechanism and then into the collector. The sails may be made out of any sufficiently rigid material such as wood, metal, rubber or plastics.

The collection member preferably extends from the cutting mechanism away from the direction of movement. In its simplest form and as a first embodiment of the present invention, the collector comprises a table for holding the collected crop heads. In this form the crop heads may be removed from the collector at intervals or when the table becomes full. Removal of the crop heads may be done by hand or the collector may be arranged to tilt forwards thereby tipping its contents out. In a form where the collector is tilted to aid in the removal of the crop heads, it may be desirable to move the pick-up reel out of the way of the collector. This may be achieved by operating the one or more rams associated with the pick-up reel as mention above.

Removal of the crop heads in this way means that the operation of the device requires interruption when the collector is full. This may be prevented by returning of the crop heads back onto the field from where they have been collected while the device is in operation. This enables the entire operation to be continuous. However, it may be important that the crop heads being returned to the field do not contain a substantial amount of viable seeds. Therefore, in accordance with a second embodiment of the present invention the collection table further comprises means for directing the cut crop heads into a mechanism, such as a hammer mill, for reducing the crop heads into a substantially powder form. The powder may then be deposited back onto the field and in this way the device can be worked without interruption.

Also within the scope of the present invention is a method for harvesting a first crop in preference to a second crop where both crops grow in combination using the harvesting device as described above.

The present invention will now be described by way of example only, with reference to the accompanying diagrammatic drawings wherein:
Fig. 1 shows a side view of a first embodiment of the device;
Fig. 2 shows a front view of the embodiment of Fig. 1; and
Fig. 3 shows a front view of a modified form of the device of Fig. 1 and Fig. 2 with the pick-up reel and part cutting mechanism removed.

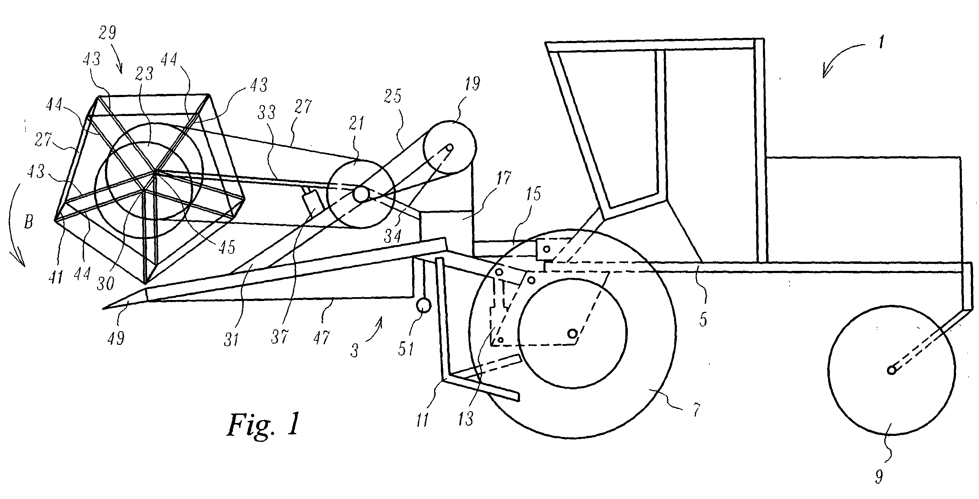

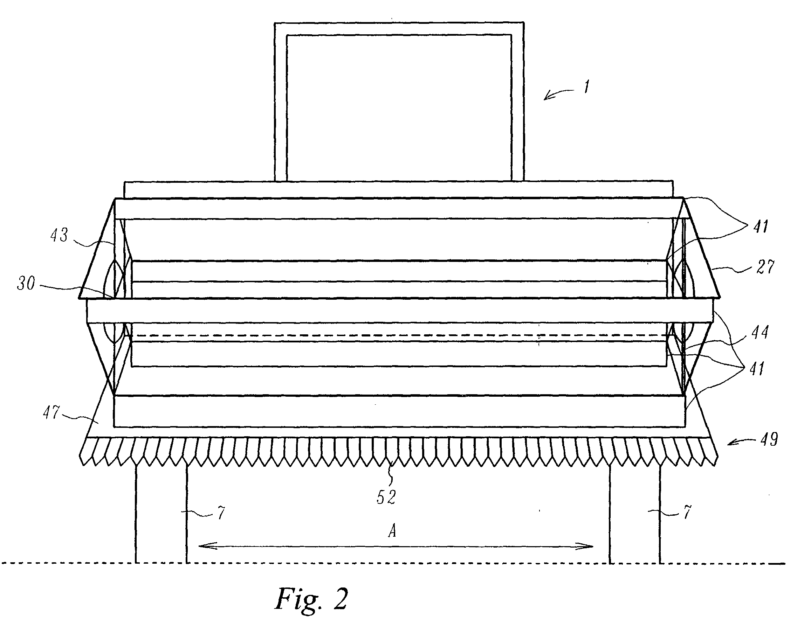

Referring to Fig. 1 and Fig. 2, there is shown a tractor 1 carrying a harvesting device 3 of the present invention mounted on its chassis 5. The front and rear wheels 7,9 of the tractor are aligned so that the rear wheel 9 follows the same path as the front wheel 7. A crop divider 11 is positioned immediately in front of the front wheel 7 to divide the crop before the front wheel passes through. The front wheels are spaced apart as indicated by A in Fig. 2 to correspond with preformed "tramlines" formed in the crop at the time of sowing.

The chassis 5 has a ram 13 which acts on the device 3 in order to adjust the height of the device 3 in relation to a first and second crop within the crop combination. A drive shaft 15 extends from the tractor 1 to a gear box 17 situated at the rear of the device 3. The gear box 17 controls the speed at which a combination of pulley wheels 19, 21 and 23 rotate. The three pulley wheels are connected by drive belts 25 and 27 respectively. The pulley wheel 23 is rigidly connected to the pick-up reel frame 27 and serves to rotate a pick-up reel 29 at a desired speed about a central axis 30.

The pick-up reel is supported by an arrangement of arms 31, 33 and 34 extending from the device 3. A ram 37 connects arms 31 and 33 and allows the position of the pick-up reel to be adjusted in relation to a collection table 47 at the front edge f which is mounted a cutter bar 49. When the ram 37 is extended fully the pick-up reel 29 is lifted clear of the cutter bar 49 and collection table 47 thereby allowing access for maintenance or for removal of cut crop heads.

The pick-up reel comprises a series of axial sails 41 (five are shown) in the form of flat wooden battens pivotally mounted at each ends to a pair of reel frame ends 43,44 which are rotatable about different axes 30,45 so that the sails 41 are held at a constant angle relative to the cutter bar 49 as the reel rotates (see arrow B) to engage the first crop heads and draw them into the cutter bar 49.

In use, the cutter bar 49 cuts the crop heads from the first crop plant as the device 3 passes through the crop combination. The cut crop heads are then drawn onto the collection table 47 by the rotating sails 41. It is preferable to keep the pick-up reel 29 rotating at a speed such that the sails pass the blades at a speed slightly faster than the forward motion of the tractor 1.

The height of the cutting mechanism 49 can be monitored by the operator by use of height gauges 51 which hang freely from the device 3 at transversely spaced apart locations. The height gauges 51 are positioned so that they hang just below the level of the cutting mechanism 49. The cutting mechanism 49 is then adjusted by using the ram 13 to a height where the height gauges 51 just flicks the surface of the second crop. In this way the cutting mechanism 49 avoids the lower second crop but engages with and cuts the taller first crop.

Once the collection table 47 is full of cut crop heads the tractor 1 is stopped, the pick-up reel 29 lifted away from the collection table 47 by extension of ram 37 and the cut crop heads removed by hand from the collection table 47 or else the collection table could be tipped to discharge the cut heads. The pick-up reel 29 is then returned to its operative position and the collection operation is continued as required.

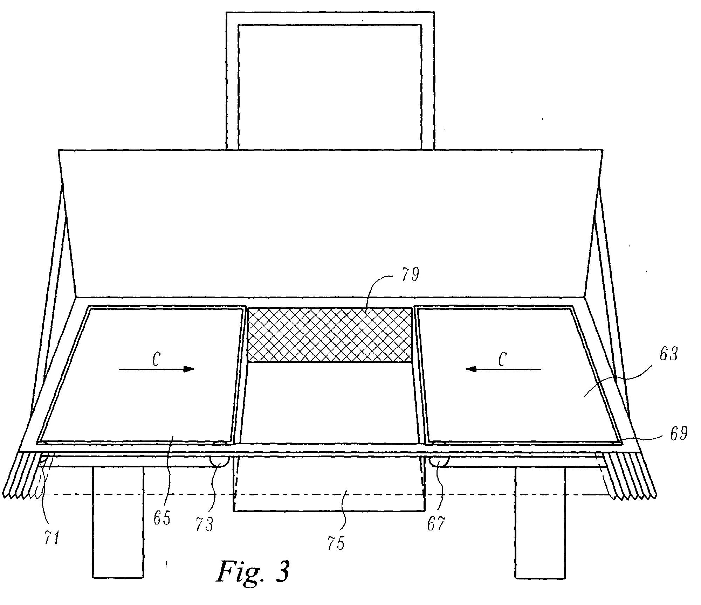

Referring to Fig 3, for convenience this embodiment has been shown without a pick-up reel or part of the cutting mechanism. In place of the collection table 47 there is provided two belts 63 and 65 respectively which are rotated about rollers 67,69 and 71,73 respectively towards the centre of the collection table as indicated by the arrows C.

Cut crop heads which are drawn onto belts 63 and 65 by the pick-up reel 29 are carried by the belts 63 and 65 to a central chamber 75 where the crop heads are crushed and ground by a hammer mill 77. The resultant powder is then fed through a mesh 79 back onto the field from where the crop heads were cut. By reducing the first crop heads to a powder, the chance of viable seeds being returned to the field is minimised. This embodiment allows the device to be operated continuously, without having to pause to discharge the cut crop heads.

## Claims

1. A device (3) for removing a first crop while maintaining a second crop where first and second crops grow in combination, said first crop being taller than said second crop; the device (3) adapted for mounting on a tractor (1) for driving the device (3) through the first and second crop combination, the device comprising
a cutting mechanism (49);
a means (13) for adjusting the height of the cutting mechanism during use such that it cuts the crop heads from the first crop while avoiding the second crop;
a means for tilting the cutting mechanism axis in relation to the tractor so it is maintained substantially parallel to the height of the second crop;
a collector (47) for collecting the cut crop heads; and
a rotatable pick-up reel (29) driven about a transverse axis, and having a plurality of axial sails (41) positioned so as to pass close to said cutting mechanism to draw the crop heads into the collection member (47).

2. A device according to claim 1 wherein the cutting mechanism has a cutter bar horizontally arranged for cutting the crop heads from the first crop plant.

3. A device according to claim 1 or claim 2 wherein the position of the cutting mechanism is adjustable by an arrangement of rams for linking to the tractor chassis and under the control of the user.

4. A device according to any one of the preceding claims wherein the pick-up reel has between 2 and 8 sails arranged uniformly about the reel so that as the reel rotates the sails draw the first crop onto the cutter mechanism and the cut crop heads into the collector.

5. A device according to any one of the preceding claims wherein the collector comprises a table for holding the collected crop heads.

6. A device according to claim 5 wherein the table comprises means for directing the cut crop heads into a mechanism for reducing the crop heads into a substantially powder form.

7. An assembly for removing a first crop while maintaining a second crop where first and second crops grow in combination, said first crop being taller than said second crop; said assembly comprising a tractor and a device according to any one of the preceding claims mounted on said tractor such that said tractor drives said device through the first and second crop combination.

8. An assembly according to claim 7 wherein the device is linked to the front of the tractor.

9. An assembly according to claim 7 or claim 8 wherein the tractor has a raised chassis such that it clears the level of at least the second crop.

10. An assembly according to any one of claims 7 to 9 wherein the tractor has aligned front and rear wheels so as to prevent any additional tracks being made through the crop combination.

11. An assembly according to any one of claims 7 to 10 further comprising a crop divider arranged in front of the wheels of the tractor so that the crop is divided immediately prior to passage of the wheels.

12. A method for harvesting a first crop in preference to a second crop where both crops grow in combination using a device or an assembly according to any one of the preceding claims; said method comprising the steps:
driving said device or assembly through the first and second crop combination;
cutting the crop heads from the first crop while avoiding the second crop;
collecting said crop heads in the collector.

13. A method according to claim 12 further comprising the steps of directing said crop heads into a mechanism for reducing said crop heads into substantially a powder; and discharging said powder during the harvesting.

## Patentansprüche

1. Vorrichtung (3) zum Herausnehmen eines ersten Ernteprodukts, während ein zweites Ernteprodukt belassen wird, wenn ein erstes und ein zweites Ernteprodukt in Kombination wachsen, wobei das erste Ernteprodukt höher ist als das zweite Ernteprodukt; wobei die Vorrichtung (3) zum Montieren an einem Traktor (1) ausgebildet ist, um die Vorrichtung (3) durch die Kombination aus erstem und zweitem Ernteprodukt zu fahren, wobei die Vorrichtung umfasst:
einen Schneidemechanismus (49);
ein Mittel (13) zum Einstellen der Höhe des Schneidemechanismus während der Verwendung, so dass er die Ernteproduktköpfe vom ersten Ernteprodukt abschneidet während das zweite Ernteprodukt unberührt bleibt;
ein Mittel zum Neigen der Schneidemechanismus-Achse in Bezug auf den Traktor, so dass sie im Wesentlichen parallel zur Höhe des zweiten Ernteprodukts gehalten wird; einen Sammler (47) zum Sammeln der geschnittenen Ernteproduktköpfe; sowie
eine drehbare Pick-up-Trommel (29), die um eine Querachse angetrieben wird und eine Vielzahl axialer Flügel (41) aufweist, die so angeordnet sind, dass sie nahe am Schneidemechanismus vorbeigehen, um die Ernteproduktköpfe in das Sammelelement (47) zu ziehen.

2. Vorrichtung nach Anspruch 1, worin der Schneidemechanismus einen Schnittbalken aufweist, der horizontal angeordnet ist, um die Ernteproduktköpfe von der ersten Erntepflanze abzuschneiden.

3. Vorrichtung nach Anspruch 1 oder 2, worin die Position des Schneidemechanismus durch eine Anordnung von Kolben zum Verbinden mit dem Traktor-Fahrgestell und gesteuert vom Benutzer einstellbar ist.

4. Vorrichtung nach einem der vorangegangenen Ansprüche, worin die Pick-up-Trommel zwischen 2 und 8 Flügel aufweist, die gleichmäßig um die Trommel angeordnet sind, so dass, wenn sich die Trommel dreht, die Flügel das erste Ernteprodukt auf den Schneidemechanismus und die geschnittenen Ernteproduktköpfe in den Sammler ziehen.

5. Vorrichtung nach einem der vorangegangenen Ansprüche, worin der Sammler einen Tisch zum Halten der gesammelten Ernteproduktköpfe umfasst.

6. Vorrichtung nach Anspruch 5, worin der Tisch Mittel umfasst, um die geschnittenen Ernteproduktköpfe in einen Mechanismus zu lenken, um die Ernteproduktköpfe im Wesentlichen in Pulverform zu zerkleinern.

7. Anordnung zum Herausnehmen eines ersten Ernteprodukts, während ein zweites Ernteprodukt belassen wird, wenn ein erstes und ein zweites Ernteprodukt in Kombination wachsen, wobei das erste Ernteprodukt höher ist als das zweite Ernteprodukt; wobei die Anordnung einen Traktor sowie eine Vorrichtung nach einem der vorangegangenen Ansprüche umfasst, die so auf dem Traktor montiert ist, dass der Traktor die Vorrichtung durch die Kombination aus erstem und zweitem Ernteprodukt fährt.

8. Anordnung nach Anspruch 7, worin die Vorrichtung mit der Vorderseite des Traktors verbunden ist.

9. Anordnung nach Anspruch 7 oder 8, worin der Traktor ein hochstehendes Fahrgestell aufweist, so dass es über der Höhe zumindest des zweiten Ernteprodukts liegt.

10. Anordnung nach einem der Ansprüche 7 bis 9, worin der Traktor ausgerichtete Vorder- und Hinterräder aufweist, um zu verhindern, dass durch die Ernteproduktkombination hindurch zusätzliche Spuren gezogen werden.

11. Anordnung nach einem der Ansprüche 7 bis 10, weiters umfassend einen Ernteproduktteiler, der vor den Rädern des Traktors angeordnet ist, so dass das Ernteprodukt geteilt wird, unmittelbar bevor es die Räder passieren.

12. Verfahren zum bevorzugten Ernten eines ersten Ernteprodukts gegenüber einem zweiten Ernteprodukt, wenn beide Ernteprodukte in Kombination wachsen, unter Verwendung einer Vorrichtung oder einer Anordnung nach einem der vorangegangenen Ansprüche, wobei das Verfahren folgende Schritte umfasst:
das Fahren der Vorrichtung oder Anordnung durch die Kombination aus erstem und zweitem Ernteprodukt;
das Abschneiden der Ernteproduktköpfe vom ersten Ernteprodukt, während das zweite Ernteprodukt ausgelassen wird;
das Sammeln der Ernteproduktköpfe im Sammler.

13. Verfahren nach Anspruch 12, weiters umfassend die Schritte des Lenkens der Ernteproduktköpfe in einen Mechanismus, um die Ernteproduktköpfe im Wesentlichen in ein Pulver zu zerkleinern; und des Abgebens des Pulvers während des Erntens.

## Revendications

1. Dispositif (3) pour récolter une première culture tout en maintenant une seconde culture, où des première et seconde cultures poussent en combinaison ladite première culture étant plus haute que ladite seconde culture ; le dispositif (3) étant apte à être monté sur un tracteur (1) pour entraîner le dispositif (3) à travers la combinaison des première et seconde cultures, le dispositif comprenant
un mécanisme de coupe (49),
un moyen (13) pour régler la hauteur du mécanisme de coupe pendant l'utilisation de telle sorte qu'il coupe les têtes des plantes de la première culture en évitant la seconde culture ;
un moyen pour faire basculer l'axe du mécanisme de coupe relativement au tracteur pour qu'il soit maintenu sensiblement parallèlement à la hauteur de la seconde culture ;
un collecteur (47) pour collecter les têtes des plantes coupées ; et
un ramasseur tournant (29) entraîné autour d'un axe transversal, et possédant une pluralité de voiles axiales (41) positionnées pour passer près dudit mécanisme de coupe pour aspirer les têtes des plantes de la culture dans l'élément de ramassage (47).

2. Dispositif selon la revendication 1, où le mécanisme de coupe possède une barre de coupe agencée horizontalement pour couper les têtes des plantes de la première culture.

3. Dispositif selon la revendication 1 ou la revendication 2, où la position du mécanisme de coupe est ajustable par un agencement de plongeurs pour la liaison avec le châssis du tracteur et sous la commande de l'utilisateur.

4. Dispositif selon l'une des revendications précédentes, où le ramasseur comporte entre 2 et 8 voiles agencées uniformément autour du ramasseur de telle sorte que lorsque le ramasseur tourne, les voiles aspirent la première culture sur le mécanisme de coupe et les têtes de plantes coupées dans le collecteur.

5. Dispositif selon l'une des revendications précédentes, où le collecteur comprend une table pour retenir les têtes des plantes recueillies.

6. Dispositif selon la revendication 5, où la table comprend des moyens pour diriger les têtes des plantes coupées dans un mécanisme pour réduire les têtes des plantes sensiblement en poudre.

7. Assemblage pour récolter une première culture tout en conservant une seconde culture, où des première et seconde cultures poussent en combinaison, ladite première culture étant plus haute que ladite seconde culture ; ledit assemblage comprenant un tracteur et un dispositif en accord avec l'une quelconque des revendications précédentes monté sur ledit tracteur de telle sorte que ledit tracteur entraîne ledit dispositif à travers les première et seconde cultures combinées.

8. Assemblage selon la revendication 7, où le dispositif est relié à l'avant du tracteur.

9. Assemblage selon la revendication 7 ou la revendication 8, où le tracteur a un châssis relevé de telle sorte qu'il se situe au moins au-dessus du niveau de la seconde culture.

10. Assemblage selon l'une quelconque des revendications 7 à 9, où le tracteur a des roues avant et arrière alignées pour empêcher que des chemins additionnels soient tracés à travers les cultures combinées.

11. Assemblage selon l'une quelconque des revendications 7 à 10, comprenant en outre un séparateur de cultures agencé à l'avant des roues du tracteur de façon que les plantes de la culture soient séparées immédiatement avant le passage des roues.

12. Procédé pour moissonner une première culture préférée à une seconde culture, où les deux cultures poussent en combinaison en utilisant un dispositif ou un assemblage selon l'une quelconque des revendications précédentes ; ledit procédé comprenant les étapes consistant à :
entraîner ledit dispositif ou assemblage à travers les première et seconde cultures combinées ;
couper les têtes des plantes de la première culture tout en évitant la seconde culture ;
recueillir les têtes des plantes dans le collecteur.

13. Procédé selon la revendication 12, comprenant en outre les étapes consistant à diriger lesdites têtes des plantes dans un mécanisme pour réduire lesdites têtes des plantes sensiblement en poudre ; et évacuer ladite poudre pendant la moisson.
